Europäisches Patentamt

European Patent Office

Office européen des brevets

(19)

(11) Publication number: **0 434 158 A2**

## (12) EUROPEAN PATENT APPLICATION

(21) Application number: **90203355.4**

(51) Int. Cl.5: **G06F 11/34**

(22) Date of filing: **17.12.90**

(30) Priority: **22.12.89 GB 8928998**

(43) Date of publication of application:
**26.06.91 Bulletin 91/26**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Wester, Rogatus Hubertus**
**Hermanus**
**c/o INT. OCTROOIBUREAU B.V., Prof.**
**Holstlaan 6**
**NL-5656 AA Eindhoven(NL)**

(74) Representative: **Andrews, Arthur Stanley et al**
**PHILIPS ELECTRONICS Patents and Trade**
**Marks Department Philips House 188**
**Tottenham Court Road**
**London W1P 9LE(GB)**

(54) Methods of operating a data processing system, and data processing systems.

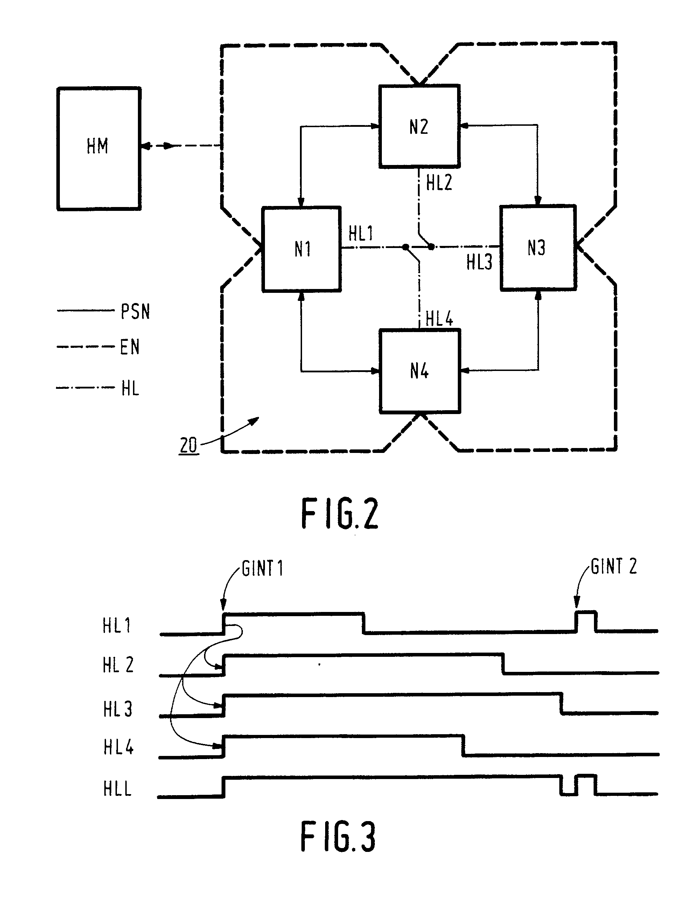

(57) In a method of operating a data processing system, an application process (AP) is periodically suspended (INT) to run a recording process (MP1/MP2) which generates a record of events and/or status information in the running of the application processes (AP). The recording process operates at two levels. A first level process (MP1) suspends the application process (AP) for a short time relatively frequently to store unprocessed data (in MDB). A second level process (MP2) suspends the application process (AP) for a longer time less frequently to process the data stored by the first level process (MP1), for example to compress the data or to upload the data for remote storage or display. The multi-level nature of the recording process (MP1/MP2) allows the disruption of the application process to be minimised. Concurrent application processes (AP', AP") which interact with the process (AP) are also suspended during the running of the second level process (MP2), so that all disruption due to the second level recording process is experienced equally by all application processes. In a multi-processor network (Figure 2), a hardware global interrupt facility (HL) is provided to synchronize the suspension of application processes on all nodes during the running of the second level process in a method as described above.

EP 0 434 158 A2

FIG.1

# METHODS OF OPERATING A DATA PROCESSING SYSTEM, AND DATA PROCESSING SYSTEMS

The invention relates to a method of operating a data processing system to obtain information on the running of an application process by the system, the method comprising running the application process while periodically suspending the operation of the application process to run a recording process which stores data recording specific events or status information, wherein the application process is one of a group of concurrent application processes and the recording process comprises a first level recording process which runs for a short time relatively frequently to store data in an unprocessed form, and a second level recording process which runs for a longer time less frequently and which processes the data stored by the first level recording process.

The invention further relates to a data processing system operating in accordance with such a method. The invention further relates in particular to a data processing system comprising a plurality of processing nodes, each node running at least one of a group of concurrent application processes, and an inter-node communication network to which the nodes are connected and which enables data to be exchanged between application processes of the group running on different nodes. Such a system is known for example from an article "DOOM: a Decentralised object-oriented machine" by W. J. H. J. Bronnenburg et al, published in IEEE MICRO, October 1987 at pages 52 to 69.

A method as set forth in the opening paragraph above is described in EP-A2-0316250, which aims to study workload distribution in a given configuration of processing hardware resources. Recording processes in general are widely used also where the application process is defined by software which is still under development by its designer. The designer is able to analyse the stored data during or after the running of the application process for example to check whether the process is operating as intended. The stored data may also for example reveal a "bottleneck" in the software or hardware defining the process where a slight re-design could greatly improve the overall performance.

In order that the running of the application process in such a method provides a realistic simulation of the process in its final, uninterrupted form, it is desirable to minimise the processor time occupied by the recording process (the recording processing overhead). For this purpose, the recording process is divided into two (or more) levels, as described above. The first level performs only a data gathering function, with the shortest possible interruption, while the second level processs operates periodically to process the gathered data whereupon a volume of recorded data can be treated efficiently. In EP-A2-0316250, resource utilisation data are gathered locally at a high frequency (corresponding to a first level process), and periodically "retrieved" (transferred to a host processor) (corresponding to a second level process).

A low overhead is particularly desirable for example when the application process is required to interact with the other processes in the group, or to respond in real-time to external influences. In such a situation, realism can be seriously impaired if the same degree of recording processing overhead is not experienced by all of the application processes. Such concurrent processes may be running by time-sharing on a single processor, or by parallel processing in a multi-processor system such as that set forth in the second opening paragraph.

EP-A2-0316250 does not describe the problem of unequal recording overhead in different processes, nor is there described any relationship between concurrent recording processes. In the embodiment of EP-A2-0316250 only one "workstation controller" is shown connected to the host computer, and the relationship between concurrent recording processes is not described for the case of a plurality of such controllers.

Similarly, recording processes in a multiprocessing environment are also described in EP-A1-0368190 (published after the priority date of the present application) and EP-A2-0130467, but without multilevel recording and without reference to the problem of concurrent application processes suffering differing amounts of recording overhead. In EP-A1-0368190, for example, the recorded data, being limited in volume, is simply stored and only processed off-line, when realism is no longer a concern.

It is an object of the invention to enable a method as set forth in the opening paragraph to be performed while increasing the realism of the method as a simulation of the concurrent application processes running without interruption.

The invention provides in its first aspect a method as set forth in the opening paragraph, characterized in that all application processes in the group are suspended during the running of the second level recording process, but only the one application process is suspended during the running of the first level recording process. By this synchronization of the interruptions the overhead due to the second level recording prccess is effectively reduced to zero, as regards interactions between the processes of the group. The effective overhead, due only to the first level process, can thus be reduced to the bare minimum required for gathering the data, and overhead differences between the processes are reduced to a minimum also.

The other application processes of the group may all have corresponding recording processes if desired, each being operated at two levels in accordance with the invention or not. In one embodiment wherein at least one further application process in the group is suspended to run a corresponding further recording process comprising further first and second level recording processes, all application processes in the group are suspended to run the second level recording processes of more than one recording process and are resumed only after all the said second level recording processes have been run. Thus the activation of a number of second level recording processes is synchronized, which may reduce the disruption of the application processes, for example if the second level recording processes can be run in parallel.

In such an embodiment the first mentioned recording process may emit a global interrupt signal to suspend all of the application processes in the group and (if desired) activate the or each further second level recording process. The one recording process may have been previously nominated as a "master" of the other processes. Alternatively the interrupt signal may be generated by the first recording process to require activation at the second level, for example because a data buffer for that recording process is full.

In a further embodiment, each second level recording process emits a ready signal upon completion and all application processes in the group are resumed when the last second level process to emit a ready signal has done so. The ready signal may take any form, from that of a simple binary signal on a wire to that of a predetermined software message.

The second level recording process may act simply to compress the unprocessed data generated at the first level, and/or it may reduce memory overhead by transferring the data to a remote storage device where it cannot affect the realistic operation of the application process. The second level recording process may be activated, for example, upon the expiry of a pre-programmed timer or whenever the amount of unprocessed data stored exceeds a threshold level.

The invention further provides a data processing system when operating to run a group of concurrent application processes and at least one recording process in accordance with a method embodying the invention as set forth above. Such a system may in some cases comprise a special-purpose development system including additional hardware features over the "target" system whose performance running the application process is being simulated.

The invention still further provides a data processing system comprising a plurality of processing nodes, each node running at least one of a group of concurrent application processes, and an inter-node communication network to which the nodes are connected and which enables data to be exchanged between application processes of the group running on different nodes, characterized in that at least one node is running a second level recording process in accordance with the method of the invention as set forth above, and in that the system further comprises means distinct from the first mentioned inter-node communication network for communicating to all nodes the global interrupt signal generated by the recording process, and means within each node for causing synchronous interruption of processing on the node upon receipt of such a global interrupt signal.

The at least one node in such a data processing system may comprise means for communicating a ready signal generated by the second level recording process, the system further comprising means for generating a resume signal when the or each second level recording process has generated a ready signal, and means for causing synchronized resumption of suspended processes on all nodes in response to the said resume signal. In one such embodiment, the global interrupt signal communication means incorporates a logic function and forms the means for generating the resume signal when all nodes have generated a ready signal. The said means may comprise a single conductor implementing for example a wired-OR function. However, a connection providing more complex serial or parallel data transfer between nodes and incorporating the desired logic function may be preferable, for example where there are a large number of nodes in the system. The synchronized resumption of interrupted processes may for example be effected by generating a further global interrupt signal.

In one embodiment wherein the first-mentioned inter-node communications network is disabled in response to a global interrupt signal, the system comprising a further inter-node communication network distinct from the first-mentioned inter-node communications network, by means of which the second level recording process or processes running on one or more of the nodes exchange data between nodes and/or with a further processing device. The further communication network may also perform other functions, for example so that programs and data may be downloaded to the data processing system from a host computer system.

Embodiments of the invention will now be described, by way of example, with reference to Tables 1 to 3 and Listings 1 to 4 within the text and to the accompanying drawings, in which:

4

Figure 1 illustrates the relationships between various application processes and monitor processes in a method embodying the invention;

Figure 2 shows in block schematic form a multi-processor parallel computer system in embodying the invention; and

Figure 3 is a waveform diagram showing the synchronization of second level monitor processes in the computer system of Figure 2.

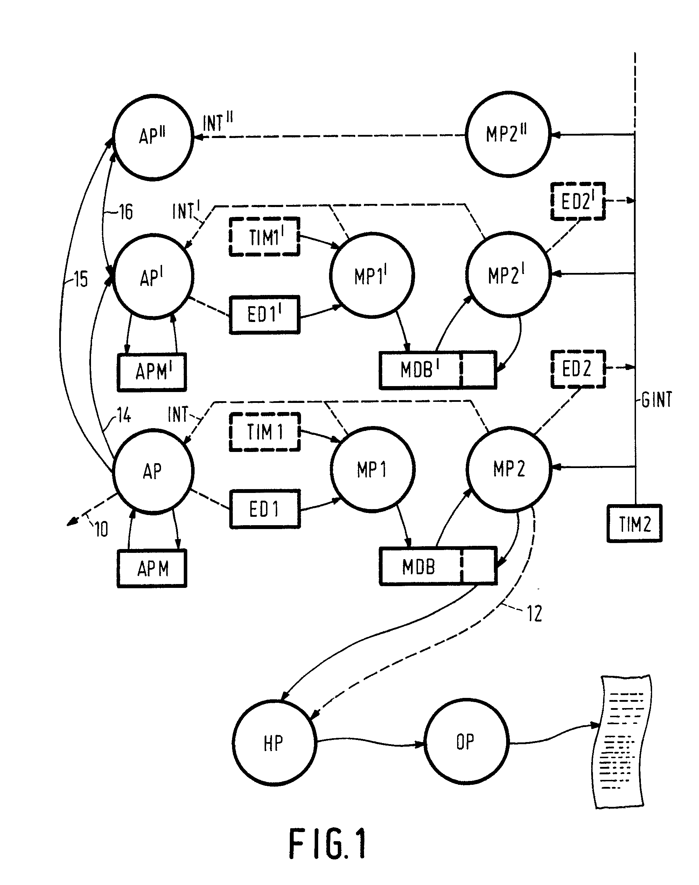

Figure 1 shows schematically the relationship between an application process AP under development by a programmer and a two-level recording process in the form of a monitor process MP1/MP2 which is being run in this example to obtain statistical data for "profiling" the operation of the application process. The running of the process AP is supervised by the person developing the application via a host process HP which provides in a conventional manner development facilities such as editing, file serving, compiling, linking and so forth. An output process OP serves inter alia to display or print tables, graphs, charts, and so forth using the monitor data gathered by the monitor process MP1/MP2.

It should be understood that the principle of a multi-level recording process is not dependent on the hardware or software structure in any particular system. For example, the different processes AP, MP1, MP2, HP and OP could all be run on the same central processor (CPU) or could be distributed over a variety of processors. Each process may itself be running on a conventional sequential CPU or on a distributed/parallel CPU. In Figure 1, the application process AP and monitor process MP1/MP2 are shown connected by data paths to an application process memory APM and monitor data buffer MDB respectively. These memories APM and MDB, and also memories for the host process HP and the output process OP may be embodied in separate elements of the system hardware or in a common block of memory.

The nature and function of the application process AP are clearly not determined by the present invention. Typically, however, the process AP will interact with data in its memory APM, and perhaps with external factors (dotted data path 10) and other concurrent processes AP' and AP", as described below. The structure of the program defining process AP will of course vary, but elements of a typical program can be seen in Listing 1 below.

```
LISTING 1

1 main ()              /* Main function of process */

2 begin

3       ...

4       f(...);        /* Main function calls function f */

5       ...

6 end


7       f(...)         /* Function f */

8       begin

9       ...

10      g(...);        /* f calls function g */

11      ...

12      h(...);        /* f calls function h */

13      ...

14 end
```

```
15 g(...)              /* Lower level function g */
16 begin
17     ...
18     j(...);          /* g calls function j */
19     ...
20 end


21 h(...)              /* Lower level function h */
22 begin
23     ...
24     j(...);          /* h calls function j */
25     ...
26 end


27 j(...)              /* Lowest level function j */
28 begin
29     ...
30 end
```

The program in Listing 1 may be written in any suitable computer language and has been divided into a number of discrete functions. A function "main()" serves as the highest level entry point for the process, and lower level functions "f(...)", "g(...)", "h(...)", and "j(...)" define distinct procedures within the process. Each function can be called from within another function. For example function j(...) may be executed as part of function g(...) (see line 18) or function h(...) (line 24). These different types of events can be distinguished by reference to the calling ("father") function and the called ("son") function. With recursive function calls (not illustrated), the father and son may be the same.

In order to evaluate the process AP, the system operator may wish to obtain a statistical record of such "father-son" events. A known and convenient form for such monitor data is shown in Table 1. The first column consists of a list of event types (in this case different father-son pairs) and for each event type the second column contains a count of events of that event type. In the UNIX operating system, for example, a "generate profile" program "gprof(...)" is known which can generate a display or printout from data collected in this form.

TABLE 1

| Event type | Count |
| --- | --- |
| main-f | 2 |
| f-g | 3 |
| f-h | 4 |
| g-j | 0 |
| h-j | 3 |

The monitor process MP1/MP2 is provided to generate this data in the monitor data buffer MDB, which can be accessed by the host process HP and consequently the output process OP. An event detector ED1 monitors the progress of the application process AP and responds to the occurrence of every event of a

6

type which it is desired to record. The event detector may be embodied in hardware or it may be a segment of code embedded in the application process program at a point appropriate to the event being recorded which activates the monitor process MP1/MP2.

The dotted link INT indicates that the application process AP is suspended during operation of the monitor process MP1/MP2. As has been noted above, it is desirable that the monitor process should interfere with the application process as little as possible, so that the operation of the system is a realistic simulation of the application process as it will finally operate. This is particularly the case in real-time computer systems and in cases where the application process interacts with concurrent processes (AP' and AP").

To update a statistical record such as that represented in Table 1 at each event the monitor process must first identify the event type and locate the entry for that type in the stored table and then read, increment and restore the event count stored in the table. In a typical computer system this may require for example 20-30 instructions to be executed to record each event. This amount of overhead has been accepted in the past as necessary in order to obtain the required data, but when, for example, the event being detected is a very frequent one, occurring perhaps every few hundred instructions, then this overhead can easily come to represent significant portion of processor time, and the simulation of the application process becomes less than realistic.

To improve the realism of the simulation, the monitor process illustrated in Figure 1 comprises two separate processes MP1 and MP2. Only the first level process MP1 is activated by the event detector ED1 for each event, while the second level monitor process MP2 is activated by a timer TIM2 and runs much less frequently than the first level process MP1.

The first level process MP1 merely records the events as they occur, without producing a statistical table or otherwise compressing the monitor data. Thus the first level process MP1 generates a large volume of unprocessed monitor data in the monitor data buffer MDB in a form such as that illustrated by Table 2 below. Each entry in the Table 2 represents one event and contains two program counter values PCF and PCS identifying the father function and the son function for the event. In Table 2, mmmm represents the program counter value on entering function main, ffff that on entering function f and so on. In more general terms, each entry specifies the event type for a single recorded event. Counting the events of each type recorded in Table 2 will lead to the figures given in Table 1.

### TABLE 2

| Event | PCF | PCS | Event | PCF | PCS |
|-------|------|------|-------|------|------|
| 1 | mmmm | ffff | 8 | ffff | hhhh |
| 2 | ffff | gggg | 9 | hhhh | jjjj |
| 3 | ffff | hhhh | 10 | hhhh | jjjj |
| 4 | hhhh | jjjj | 11 | ffff | gggg |
| 5 | ffff | hhhh | 12 | ffff | hhhh |
| 6 | ffff | gggg | 13 | ———— | ———— |
| 7 | mmmm | ffff | 14 | ———— | ———— |

The first level monitor process MP1 may typically require only 5 or 6 instructions, so that the application process AP can run more realistically. In particular, such a short routine can generally be in-line coded, whereas a larger routine would have to be provided as a subroutine. The additional overhead involved in subroutine calls can therefore be avoided. However, the second level process MP2 is provided because the volume of the monitor data in its unprocessed form (Table 2) can be very large, considering that certain events might occur hundreds of times every second. An additional factor is that the space for the monitor data buffer MDB may have been provided within the same physical memory as the application process memory APM. In that case, a large monitor data buffer might be unavailable, or might at least further reduce the realism of the simulation.

In the embodiment shown in Figure 1, the second level monitor process MP2 performs the processing required to convert the unprocessed monitor data (Table 2) into the more compact statistical form of Table 1 and stores it back in the monitor data buffer. The compact data can be read by the host process HP after the completion of the application process run. In an alternative embodiment, illustrated by the dotted data path 12, the second level monitor process might simply transfer the unprocessed data (Table 2) to a remote and more capacious memory store. In a system where the host process HP operates in a remote system with access to its own memory and mass storage, this alternative may be advantageous. The output process OP may also be enabled to provide a "live" display of the system performance as the monitor data is collected.

Alternatively or in addition to the event detector ED1, a timer TIM1 (shown dotted) may be provided in hardware or software form which can activate the first level monitor process independently of the event detector ED1. In response to the expiry of the timer TIM1, the first level monitor process MP1 may, for example, record in the monitor data buffer MDB status information such as that illustrated by Table 3. This type of recording, known as "sampling", provides a regular "snapshot" of the application process. Each sample in Table 3 includes (by way of example only) the current program counter value (PC) in the program defining the application process, a register value (REG1) and/or further data on the number of communication actions, the number of idle program loops and so forth. The sample data stored in the buffer MDB can also be compressed and/or transferred by the second level process MP2 far more efficiently than if it were compressed or transferred at every sample.

TABLE 3

| Time | Status: | PC | REG1 | etcetera |
|------|---------|------|------|----------|
| 1 | | xxxx | xx | ... |
| 2 | | xxxx | xx | ... |
| 3 | | xxxx | xx | ... |
| 4 | | xxxx | xx | ... |
| 5 | | xxxx | xx | ... |
| 6 | | xxxx | xx | ... |
| 7 | | xxxx | xx | ... |
| . | | .... | .. | ... |
| . | | .... | .. | ... |
| . | | .... | .. | ... |

Figure 1 shows two further application processes AP' and AP" which run concurrently with the first-mentioned application process AP. The processes AP, AP' and AP" may run on a common CPU by time-sharing or they may run in parallel on separate CPU's. They may use a common memory or have separate memories APM, APM' etcetera, as shown. Whatever the detailed implementation, the processes AP, AP' and AP" interact in some way via data paths 14, 15 and 16 so that any realistic simulation must involve running all three application processes. Furthermore, in the example is illustrated it is desired that both processes AP and AP' are monitorable by corresponding monitor processes MP1/MP2 and MP1'/MP2'.

The monitor process MP1'/MP2' corresponding to the second application process AP' has its own event detector ED1' and/or timer TIM1' for interrupting the process AP' (as indicated by the dotted lid INT') and activating the corresponding first level process MP1'. The second level processes MP2 and MP2' however are both activated by the same timer TIM2 whose output therefore carries a "global interrupt" signal GINT, rather than a "local" interrupt signal such as those generated by the timers TIM1 and TIM1'. Although it is not desired to gather monitor data for the third application process AP", a corresponding "empty" second level monitor process MP2" is provided as a synchronizing process for interrupting the third application process AP" (dotted link INT") in response to the global interrupt signal GINT.

It will be appreciated that very different amounts of processing overhead may be associated with the different application processes AP, AP' and AP". In a conventional system this could seriously impair the realism of the simulation, particularly with regard to the interactions between the processes AP, AP' and AP". In the system just described, however, this difference in processing overhead is made invisible to the application processes AP, AP' and AP", because all are suspended at the same time and all are resumed together only when both of the second level monitor processes MP2 and MP2' are complete.

Instead of, or in addition to the timer TIM2, an event detector ED2 may be provided to generate the global interrupt signal GINT. The event detector ED2 might be sensitive for example to the amount of unprocessed monitor data in the buffer MDB. Another event detector ED2' could be sensitive in the same way to the amount of data in the buffer MDB' for the second process AP'. Thus the global interrupt could be triggered as soon as any of the buffers MDB, MDB' becomes too full of unprocessed monitor data.

The invention may be of particular use in the field of parallel or distributed computer systems, where many application processes may be running asynchronously on many separate processing nodes. Figure 2 shows a parallel computer system 20 connected to a host computer HM. The parallel computer comprises four separate processing nodes N1, N2, N3 and N4. The nodes N1-N4 are arranged together in a ring network. Each node includes a data processor and also a communication processor to provide packet switching communication links PSN between neighbouring nodes in the ring. Each node N1-N4 is also connected to the host computer HM via an independent "ethernet"-type network EN. The host computer, running a host process such as that referenced HP in Figure 1, uses the ethernet network EN to download programs and data defining the application processes. The application processes themselves communicate only via the packet switching network PSN.

The system of Figure 2 as described so far is therefore a simplified version of the Decentralized Object-Oriented Machine (DOOM) described by W.J.H.J. Bronnenberg et al. in IEEE Micro, October 1987, at pages 52 to 68. Reference can be made to that article for details of the structure of each node N1-N4, different processor network topologies, methods of distributing application processes among the nodes and so forth. It will be appreciated by the person skilled in the art that although the running of a multi-level recording process as described with reference to Figure 1 will be used in the following description as an example to illustrate the utility of the data processing system shown in Figure 2, the utility of such a system is by no means limited to such an application.

The processing nodes N1 to N4 are provided with a further connection in the form of a "hold line" HL for implementing the global interrupt function. The operation of the hold line HL is illustrated by the waveform diagram of Figure 3. Listings 2, 3 and 4 define in pseudo-code form routines which are executed at different stages in the operation to synchronize the second level monitor processes corresponding to all application processes, even when these are distributed over different processing nodes.

The hold line output HL1, HL2 etcetera of a node N1, H2 etcetera can occupy a high/"not ready" state or a low/"ready" state. In the low/"ready" state, the outputs HL1 etcetera have a high impedance and function also as inputs. In this way the actual level HLL on the hold line is a logical combination of the hold line outputs HL1, HL2 etcetera of the different nodes N1, N2 etcetera. HLL is high if any of the node outputs HL1 etcetera is in the high/"not ready" state, and is low only when all node outputs HL1 etcetera are in the low/"ready" state. The hold line connection facilitates the running of a multi-level recording process as follows.

Suppose that Node N1 contains a programmed timer or other means to initiate the second level monitor process (MP2 etc.) for all nodes (see timer TIM2 in Figure 1). When the timer expires, an interrupt is effected within node N1 which halts any application process (AP etc.) running in node N1 and causes the routine "switch_to_monitor" (Listing 2) to be executed.

LISTING 2

```
1 Switch_to_monitor()

2 begin

3     save application process registers;

4     disable global interrupt;

5     signal "not ready" on hold line output;

6     stop devices;

7     restore monitor registers;

8     resume monitor process;

9 end.
```

The listing will be largely self-explanatory to those skilled in the art, but it should be noted that in line 5 of Listing 2 the node N1 is caused to set its hold line output HL1 to the high/"not ready" state, at the instant referenced GINT1 in Figure 3. As indicated in the waveform HLL, this causes the hold line connection to all nodes to go high, which is detected and causes an interrupt in each of the other nodes N2, N3 and N4. In this way, the node N1 effects a synchronous interruption of processing on all nodes. Each node then executes a routine corresponding to the routine "switch_to_monitor" defined in Listing 2. All application processes are thus suspended and all nodes' hold line outputs HL1 to HL4 are made high/"not ready", as shown in Figure 3. Line 4 disables the global interrupt to prevent re-activation of the monitor process as soon as it is finished.

The communications processor in each node is disabled in line 6 of Listing 2 for the duration of the global interrupt so that the packet switching network PSN is inoperative. Other peripheral devices may also be disabled, for example by raising an interrupt priority level. The monitor processes communicate with the host computer HM via the ethernet network EN to upload monitor data for external storage, processing and/or display.

Lines 7 and 8 in Listing 2 cause control in each node to pass to the corresponding second level monitor process or processes. These second level monitor processes can read and process the data that has been stored in monitor data buffers by corresponding first level monitor processes during the running of the corresponding application processes. When a second level monitor process has completed its task, the synchronizing routine "end_of_monitor" defined in Listing 3 is executed. An empty monitor process such as MP2" (Figure 1) which is provided solely for synchronization might consist simply of the routine "switch_to_monitor" directly followed by the routine "end_of_monitor".

LISTING 3

```
1 end_of_monitor( )
2 begin
3      save monitor registers;
4      signal "ready" on hold line output;
5      wait until all ready;
6      set global interrupt vector on switch_to_application;
7      enable global interrupt;
8      busy wait for global interrupt;
9 end
```

In line 4 of Listing 3 the hold line output of the node is set to the high-impedance, low/"ready" state and in line 5 the process waits until the hold line actually goes low (HLL low) which constitutes a "resume application process" signal. As can be seen from Figure 3, this only happens when the last node (N3 in this example) has signalled "ready" (HL3 low). By means of lines 6-8 of Listing 3 the control in all nodes is passed back to the application process via a routine "switch_to_application" defined in Listing 4. This occurs simultaneously in all nodes when a second global interrupt signal is generated briefly by the node N1 at the instant referenced GINT2 in Figure 2.

LISTING 4

```
1 switch_to_application ( )
2 begin
3      set global interrupt vector to switch_to_monitor;
4      start devices;
5      restore application process registers;
6      resume application process;
7 end.
```

Before control is returned to the application process, this routine in line 3 resets the global interrupt vector to point to the routine "switch_to_monitor" (Listing 2), so that the monitor process will be run again in response to the next global interrupt signal.

Those skilled in the art will readily appreciate the wide variety of embodiments that are possible depending on the nature of the data processing system, and the type of monitor data being gathered. For example, while the embodiments described may relate specifically to the problem of profiling a program under development, the principle of a multi-level recording process may equally be applied to the evaluation of the system hardware. In such a case, the application process AP may be one defined and run solely for the purpose of testing certain aspects of the hardware. In a multi-processor network such as DOOM, for example, the application process may be designed to test the efficiency communications in various different network topologies. In that application, the global interrrupt mechanism may be used to synchronize the communication of test messages, in which case the recording processes may be replaced by monitor processes for synchronizing the transmission of test messages and so forth.

As a further variation, while the simple wired-OR hold line connection HL will be adequate for a multi-processor network having only a few nodes, a system such as DOOM (Bronnenburg et al) having maybe 100 nodes may require a more complex connection. A two-wire link with a simple signalling protocol has been found sufficient for this purpose and it is well within the capacity of the person skilled in the art to implement such a link in any given system if it is not already provided for another purpose. Also in a larger system it may not be practical to have the host connected directly to every node for uploading of monitor data, as by the ethernet EN in the embodiment of Figure 2. It would be possible in such cases to have an ethernet or other connection to a sub-group of nodes, and to use other means such as a VMS bus connection between the nodes in the sub-group.

**Claims**

1. A method of operating a data processing system to obtain information on the running of an application process by the system, the method comprising running the application process while periodically suspending the operation of the application process to run a recording process which stores data recording specific events or status information, wherein the application process is one of a group of concurrent application processes and the recording process comprises a first level recording process which runs for a short time relatively frequently to store data in an unprocessed form, and a second level recording process which runs for a longer time less frequently and which processes the data stored by the first level recording process, characterized in that all application processes in the group are suspended during the running of the second level recording process, but only the one application process is suspended during the running of the first level recording process.

2. A method as claimed in Claim 1 wherein at least one further application process in the group is suspended to run a corresponding further recording process comprising further first and second level recording processes, and wherein all application processes in the group are suspended to run both of the second level recording processes and are resumed only after both of the second level recording processes have been run.

3. A method as claimed in Claim 2 wherein the first mentioned recording process emits a global interrupt signal to suspend all of the application processes in the group and to activate the or each further second level recording process.

4. A method as claimed in Claim 2 or Claim 3 wherein each second level recording process emits a ready signal upon completion and wherein all application processes in the group are resumed when the last second level recording process to emit a ready signal has done so.

5. A method as claimed in any preceding claim wherein the or each second level recording process operates by transferring the stored data to a remote device.

6. A method as claimed in any preceding claim wherein the or each second level recording process processes the stored data to generate data in a more compact statistical form.

7. A method as claimed in Claim 6 wherein at least one first level recording process operates to record the occurrence of an event of a specified type or types in the running of the application process and

EP 0 434 158 A2

generates unprocessed data comprising a list containing an event type for each recorded event, while the second level recording process corresponding to the at least one first level recording process processes the said list to generate a table containing for each event type the number of occurrences of that event type in the said list.

8. A method as claimed in Claim 7 wherein different father-son function calls in the running of the application process constitute at least some of the different event types.

9. A method as claimed in any preceding claim wherein the group of application processes form a group of interacting objects in an object-oriented application program.

10. A data processing system when operating to run a group of concurrent application processes and at least one recording process in accordance with a method as claimed in any preceding claim.

11. A data processing system comprising a plurality of processing nodes, each node running at least one of a group of concurrent application processes, and an inter-node communication network to which the nodes are connected and which enables data to be exchanged between application processes of the group running on different nodes, characterized in that at least one node is running a second level recording process in accordance with the method of Claim 3 and in that the system further comprises means distinct from the first mentioned inter-node communication network for communicating to all nodes the global interrupt signal generated by the recording process, and means within each node for causing synchronous interruption of processing on the node upon receipt of such a global interrupt signal.

12. A system as claimed in Claim 11 wherein the at least one node further comprises means for communicating a ready signal generated by the second level recording process, the system further comprising means for generating a resume signal when the or each second level recording process has generated a ready signal, and means for causing synchronized resumption of suspended processes on all nodes in response to the said resume signal.

13. A system as claimed in Claim 12 wherein the means for causing synchronized resumption comprises means for generating a further global interrupt signal in response to the resume signal.

14. A system as claimed in any of Claims 11 to 13 wherein the first-mentioned inter-node communications network is disabled in response to a global interrupt signal, the system comprising a further inter-node communication network distinct from the first-mentioned inter-node communications network, by means of which the second level recording process or processes running on one or more of the nodes exchange data between nodes and/or with a further processing device.

12

FIG.1

FIG.2

FIG.3